# EUROPEAN PATENT APPLICATION

(11) **EP 4 570 744 A1**
(43) Date of publication of application: **18.06.2025**
(21) Application number: 23217344.3
(22) Date of filing: 15.12.2023
(51) Int. Cl.: C01B 3/04, C01B 3/50, F25J 1/00, C01B 3/56, F25J 3/06

(54) **METHOD FOR AMMONIA RECOVERY VIA PARTIAL LIQUEFACTION FROM AN AMMONIA CRACKER USING CRYOGENIC SEPARATION**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Shrivastava, Swatantra Kumar, 60439 Frankfurt am Main (DE); Lutz, Michael, 60439 Frankfurt am Main (DE); Ulber, Dieter, 60439 Frankfurt am Main (DE)
(74) Representative: Air Liquide

(57) **Abstract**

A method for producing hydrogen using a feed stream comprising ammonia is provided. The method can include the steps of: cracking a gaseous ammonia feed in an ammonia cracker to produce a cracked gas stream comprising hydrogen, nitrogen, and unreacted ammonia; cooling the cracked gas stream to a first temperature that is sufficient for condensing at least a portion of the unreacted ammonia to form a dual phase fluid; separating the dual phase fluid in an ammonia separator to produce a liquid ammonia stream and a top gas stream comprised predominately of hydrogen and nitrogen; removing additional ammonia from the top gas stream using a front-end purification system to form a purified top gas stream; further cooling the purified top gas stream to a second temperature that is sufficient for condensing at least a portion of the nitrogen within the top gas stream to form a dual-phase stream, wherein the second temperature is colder than the first temperature; introducing the dual-phase stream to a cryogenic hydrogen separator under conditions effective for separating hydrogen and nitrogen, thereby creating a liquid nitrogen stream and a hydrogen top gas; warming and vaporizing the liquid nitrogen stream to produce a gaseous nitrogen stream; warming the hydrogen top gas to produce a gaseous hydrogen product stream; and recycling the liquid ammonia stream produced by the ammonia separator to a point upstream the ammonia cracker.

## Description

### Technical Field of the Invention

The present invention relates to a method for hydrogen production using non-hydrocarbon feedstocks. More specifically, embodiments of the present invention are related to using ammonia as a feedstock to a hydrogen production facility in lieu of hydrocarbons, particularly natural gas.

### Background of the Invention

In an effort to reduce the effects of carbon dioxide emissions, new energy carriers are becoming increasingly important. One of the leading energy carriers is hydrogen; however, due to its small molecular size, high pressure requirements, and very low boiling point, transportation of elemental hydrogen is difficult and costly.

Ammonia (NH₃) has raised some attention in the literature, since existing infrastructure can be used for storage and transportation (e.g., LPG infrastructure). As such, production of hydrogen using ammonia, instead of natural gas, is foreseen to play a major role in the future of hydrogen as a key molecule in the low carbon energy transition.

Various NH₃ cracking concepts have been proposed so far, often involving one or more of the following disadvantages:
- the cracking is conducted at low pressure, with the consequence that the hydrogen is obtained at low pressure. Hydrogen cannot, however, be compressed in centrifugal compressors, owing to its low molecular weight, and must instead be compressed in less efficient, less reliable and more costly piston-type or membrane-type compressors;
- most low-pressure processes have a limited scalability and therefore are not suitable for world scale hydrogen production. For large scale production (i.e., typically 200 tpd or 100,000 Nm3/h H₂), the ammonia consumption must be limited as far as possible;
- an ammonia recycle loop is required around the cracker, leading to extra equipment and costs; otherwise, the ammonia consumption is much higher than the theoretical minimum;
- it can be a challenge to devise an efficient heat integration scheme in which no steam is produced because, unlike the steam methane reforming process, where steam generation is an integral part of the overall heat integration and rapid cooling by water is required to protect the materials from metal dusting corrosion, ammonia cracking does not require any steam to be produced.

In addition to those issues, additional treatments of the ammonia cracker cracked gas must also be taken into account. For example, when producing hydrogen from ammonia cracking, it is common to have an ammonia cracker offgas having a mixture of hydrogen, nitrogen, and unreacted ammonia. This cracked gasmust then be adequately separated into their individual components, such that the product hydrogen stream has very little ammonia remaining.

Separation of ammonia from a gaseous mixture of hydrogen, nitrogen, and ammonia is typically done in three ways:
- in ammonia synthesis, ammonia is separated as a product via partial condensation at temperatures between -20 °C and 30 °C and pressure between 100 bar and 1000 bar;
- for commercially available small scale ammonia crackers, molecular sieves are applied for the removal of NH₃ with around 1000 - 100 ppm NH₃ in the feed; and
- since ammonia is well soluble in water, it can be separated via a water wash / water scrubber. The ammonia is subsequently removed from the water via stripping using air or steam. Stripping is usually applied for the treatment of wastewater.

The remaining mixture of hydrogen and nitrogen, as well as small amounts of ammonia, can then be addressed by adsorption processes such as pressure swing adsorption (PSA) or partial condensation of nitrogen in a cryogenic process.

Some of the problems associated with separation methods known heretofore are as follows:
- The process of ammonia synthesis is carried out at temperatures between 400 °C and 500°C. To separate the ammonia product via partial condensation, the product gas has to be cooled down to mentioned -20 °C - 30 °C. The remaining H₂/N₂ mixture is reheated and recycled in the process. This cooldown and reheating for NH₃ separation only is therefore energy demanding.
- The technology of molecular sieves is commercially applied for ammonia concentrations around 100-1000 ppm. However, in an ammonia cracking process, higher concentrations can be expected. Therefore, the technology cannot be applied without further modifications.
- Water wash / scrubbing and subsequent stripping to regenerate the water does not yield a pure ammonia stream.

In an ammonia cracker, even after ammonia separation, small amounts of ammonia may be present in the gas. Therefore, problems and disadvantages arise with the state of the art of H₂ and N₂ separation:
- The adsorbents used in the PSA process for hydrogen purification have a limit on the maximum amount of ammonia present in the cracked gas sent to the PSA. To avoid ammonia recovery upstream the PSA, high temperatures are required in the cracking reactor to convert the ammonia by a sufficiently large fraction. Due to this high cracking temperature, a lot of undesired waste heat is available in the cracker offgas. The said waste heat results in the unwanted coproduction of steam just as in conventional SMR based hydrogen production.
- As a cryogenic process to separate N₂ and H₂ requires temperatures around -200°C, ammonia would freeze at these temperatures. Therefore, there is a limit on ammonia concentration in the feed gas of such a process.

Therefore, it would be advantageous to provide a solution that can allow for efficient production of hydrogen from an ammonia feed gas without suffering from the aforementioned disadvantages.

### Summary of the Invention

The present invention is directed to an apparatus and process that satisfies at least one of these needs. In certain embodiments of the invention, an ammonia feed gas can be cracked to form hydrogen, and then the unreacted NH₃ is separated from a cracked gas downstream of the cracker, before the recovered ammonia is recycled for use as either fuel or feedstock.

In another embodiment, the cracked gas is cooled to a temperature that is between the freezing point and condensing point of ammonia (e.g., below 0°C), and then sent to an ammonia separator to remove the condensed ammonia. In the event this step does not remove enough ammonia from the gas phase, an adsorption unit such as a TSA can be included downstream of the ammonia separator to remove the trace quantities of ammonia, prior to cryogenically cooling the resulting N2/H2 stream to a temperature that is sufficient to condense the nitrogen. This cryogenically cooled stream can then be sent to a hydrogen purification unit to produce separate nitrogen and hydrogen streams.

Certain embodiments of the present invention advantageously provide for separation of unconverted NH3 using partial condensation with a subsequent separation of the H2 and N2 using cryogenic separation methods. As such, there is no need for reheating the H2/N2 stream following partial condensation of the NH3. In another embodiment, the invention can provide a synergistic result by using the cold energy from the incoming NH3 liquid feed stream to provide at least a portion of the cooling needed reach temperatures to partially condense the unreacted NH3 of the cracked gas.

A method for producing hydrogen using a feed stream comprising ammonia is provided. The method can include the steps of: cracking a gaseous ammonia feed in an ammonia cracker to produce a cracked gas stream comprising hydrogen, nitrogen, and unreacted ammonia; cooling the cracked gas stream to a first temperature that is sufficient for condensing at least a portion of the unreacted ammonia to form a dual phase fluid; separating the dual phase fluid in an ammonia separator to produce a liquid ammonia stream and a top gas stream comprised predominately of hydrogen and nitrogen; removing additional ammonia from the top gas stream using a front-end purification system to form a purified top gas stream and a liquid ammonia stream;; further cooling the purified top gas stream to a second temperature that is sufficient for condensing at least a portion of the nitrogen within the top gas stream to form a dual-phase stream, wherein the second temperature is colder than the first temperature; introducing the dual-phase stream to a cryogenic hydrogen separator under conditions effective for separating hydrogen and nitrogen, thereby creating a liquid nitrogen stream and a hydrogen top gas; warming and vaporizing the liquid nitrogen stream to produce a gaseous nitrogen stream; warming the hydrogen top gas to produce a gaseous hydrogen product stream; and recycling the liquid ammonia stream produced by the ammonia separator to a point upstream the ammonia cracker.

In optional embodiments of the method of the invention:
- the method can include warming a liquid ammonia feed stream to produce the gaseous ammonia feed;
- the cracked gas stream is cooled to the first temperature using refrigeration from a stream selected from the group consisting of the liquid ammonia feed stream, the liquid nitrogen stream, the hydrogen top gas, and combinations thereof;
- the first temperature is between 0°C and a freezing point of ammonia at a pressure of the cracked gas stream;
- the pressure of the cracked gas stream is between 10 and 50 bar(a);
- the method can include using heat from the cracked gas stream to produce steam;
- an export steam to gaseous hydrogen product stream ratio is between 0 and 5 kg steam/Nm³ H₂;
- the method can include expanding the hydrogen top gas to provide additional refrigeration;
- the hydrogen top gas is expanded to a pressure between 5 and 25 bar(a);
- the front-end purification system is a temperature swing adsorber; and/or
- the liquid ammonia stream, after being heated, is recycled back to the ammonia cracker.

### Brief Description of the Drawings

These and other features, aspects, and advantages of the present invention will become better understood with regard to the following description, claims, and accompanying drawings. It is to be noted, however, that the drawings illustrate only several embodiments of the invention and are therefore not to be considered limiting of the invention's scope as it can admit to other equally effective embodiments.
FIG. 1 shows an embodiment of a hydrogen production facility using ammonia as the feedstock in accordance with an embodiment of the prior art.
FIG. 2 shows an embodiment of a hydrogen production facility using ammonia as the feedstock that includes ammonia recovery from the cracked gas in accordance with an embodiment of the present invention.

### Detailed Description

While the invention will be described in connection with several embodiments, it will be understood that it is not intended to limit the invention to those embodiments. On the contrary, it is intended to cover all the alternatives, modifications and equivalence as may be included within the spirit and scope of the invention defined by the appended claims.

In reference to the Figures, unless otherwise noted, dotted and dashed lines between two pieces of equipment are meant to indicate that the equipment is, at a minimum, thermally integrated.

It can be expected that the gaseous mixture from an ammonia cracker generally contains ammonia in the range of around 5 - 0.1 mole% (depending on the reactor temperature). The ammonia can be condensed at temperatures between the freezing- and boiling temperature, which depends upon the pressure. Temperature ranges between -100°C and 0°C are reasonable. Furthermore, cryogenic separation of hydrogen and nitrogen requires temperatures around -200°C.

In certain embodiments, the invention combines the partial condensation of ammonia and cryogenic H₂/N₂ separation. To reach -200°C for cryogenic H₂/N₂ separation, the temperature window for NH₃ condensation (0 to -100°C) is passed anyway. The partial condensation of ammonia can therefore be achieved with a better separation and without additional cooling. This way, the cracker offgas can easily be purified from the majority unconverted NH₃, thereby preventing any freezing issues in cryogenically separating the H₂/N₂ in the offgas.

In another embodiment, the initial ammonia feed for the ammonia cracker can be sourced from a liquid ammonia storage tank held at temperatures below 0°C, preferably around -33°C. Prior to sending the ammonia to the cracker, it must be heated and vaporized. Therefore, certain embodiments use this refrigeration energy from the liquid ammonia feed to provide the cooling needed to partially condense the unconverted ammonia in the offgas.

In another embodiment of the invention, the ammonia recovered is pure (preferably >99.9%), and is recovered without the need of a wash- and stripping column (i.e., no ammonia wash is necessary).

In yet another embodiment, the cracking temperature can be lowered. While this is less efficient with respect to the ammonia to hydrogen conversion, the offgas is now at a lower temperature, which means less waste heat is available and therefore, less steam is produced. This embodiment is particularly useful in instances in which lower amounts, or no amounts, of steam is desired.

In another embodiment, multiple fluid streams can exchange thermal energy within a multi-fluid cryogenic heat exchanger.

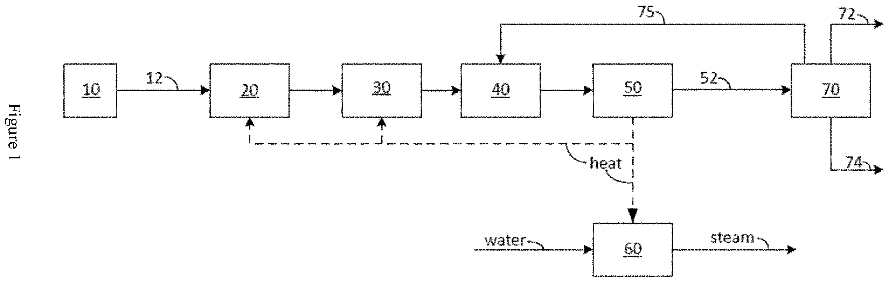

A reference case is provided, Case 1, based on the cracking of NH₃ at a cracking T of 600°C. This reference case is described in FIG. 1. The feed NH₃ 12 is withdrawn from an ammonia storage source and is then vaporized and pre-heated in several heat exchangers 20, 30 to a temperature in excess of 500°C, before being sent to the cracking reactor 40, where it is cracked in catalyst-filled tubes at an outlet cracking temperature of 600 °C. The cracked gas is cooled in the cracked gas cooling section 50, wherein the heat capacity of the cracked gas is used to preheat the feed to the cracker and to generate steam 60. Depending on the cracking temperature and the ammonia content of the cracked gas 52, either PSA or cryogenic separation of Hydrogen 70 is used.

The PSA off-gas or the nitrogen rich off gas 75 from the cryogenic separation unit composed of Nz, Hz, and/or unreacted NH₃ is sent to the burners of the cracking furnace 40, where it is mixed and combusted with NH₃ fuel and hot combustion air (not shown). Part of the heat generated in the furnace is used in the endothermic cracking reaction. The remaining heat in the flue gas is then successively used to heat the cracker feed, generating superheated steam and to heat the combustion air. In such a layout, a common steam system for the process gas and flue gas is considered. The boiler feed water is preheated by cracked gas, vaporized in the boilers located on process and flue gas side, and superheated. The steam production is exported as a co-product.

In the Cryogenic unit for purification of hydrogen, cracked gas 52 is cooled to a temperature around -200°C. The cooled hydrogen rich gas 72 can be depressurized from roughly 30 bar(g) to 22 bar(g) and thereby cools down even further. The cold hydrogen rich gas and the nitrogen rich offgas 74 is used to cool the incoming cracked gas 52.

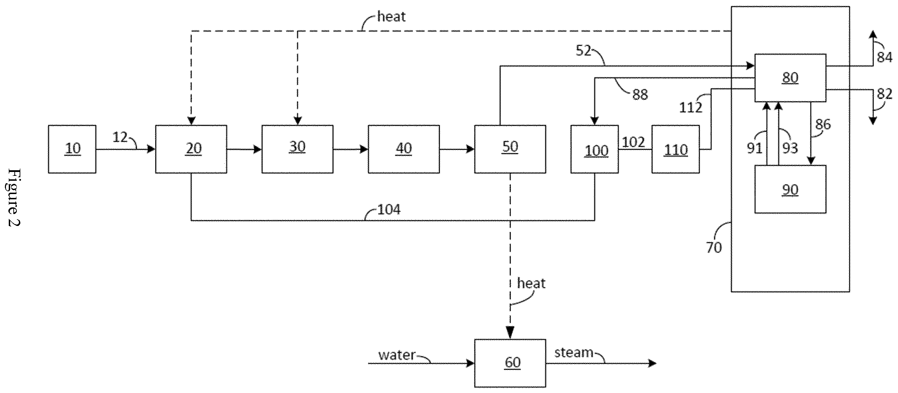

FIG. 2 provides a block flow diagram for an embodiment of the present invention, in which the cracked hot gas 52 is cooled in 2 steps. In the first step, the hot cracked gas is cooled to approximately 0 to -100 °C. This partially cooled stream 88, can be then sent to the ammonia separator 100, which can be any suitable liquid-gas separator known in the art, to create an ammonia recycle stream 104, and a partially separated stream 102. In a preferred embodiment, this partially separated stream 102 can be sent to a purification unit 110 having a bed of adsorbents such as a temperature swing adsorber (TSA) that is configured to remove/adsorb remaining impurities (e.g., ammonia) from stream 102 in order to form N₂/H₂ stream 112. Once the bed is fully adsorbed, additional ammonia can be recovered from the TSA via a desorption step. In a preferred embodiment, purification unit 110 can include two or more TSAs that are operated in alternating sequence between adsorption and desorption. The temperature is to be selected based on the overall heat integration. Preferably, that heat can be used within the process, like preheating or evaporation of process streams, with or without the production of steam.

The N₂/H₂ stream 112, which still contains ammonia in the range of 0.01 mol% to 0.8 mol% depending on temperature and pressure of the partial condensation, is then sent back to the heat exchanger 80 for further cooling to form cooled N₂/H₂ stream 86, which is sent to hydrogen separator 90, wherein the cooled N₂/H₂ stream 86 is separated into a nitrogen rich stream 91 and a hydrogen rich stream 93. These two streams 91, 93 are introduced back into the heat exchanger 80 for warming therein, and collected as nitrogen product 82 and hydrogen product 84.

While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations that fall within the spirit and broad scope of the appended claims. The present invention may suitably comprise, consist or consist essentially of the elements disclosed and may be practiced in the absence of an element not disclosed. Furthermore, language referring to order, such as first and second, should be understood in an exemplary sense and not in a limiting sense. For example, it can be recognized by those skilled in the art that certain steps or devices can be combined into a single step/device.

The singular forms "a", "an", and "the" include plural referents, unless the context clearly dictates otherwise. The terms about/approximately a particular value include that particular value plus or minus 10%, unless the context clearly dictates otherwise.

Optional or optionally means that the subsequently described event or circumstances may or may not occur. The description includes instances where the event or circumstance occurs and instances where it does not occur.

Ranges may be expressed herein as from about one particular value, and/or to about another particular value. When such a range is expressed, it is to be understood that another embodiment is from the one particular value and/or to the other particular value, along with all combinations within said range.

## Claims

1. A method for producing hydrogen using a feed stream comprising ammonia, the method comprising the steps of:
cracking a gaseous ammonia feed in an ammonia cracker to produce a cracked gas stream comprising hydrogen, nitrogen, and unreacted ammonia;
cooling the cracked gas stream to a first temperature that is sufficient for condensing at least a portion of the unreacted ammonia to form a dual phase fluid;
separating the dual phase fluid in an ammonia separator to produce a liquid ammonia stream and a top gas stream comprised predominately of hydrogen and nitrogen;
removing additional ammonia from the top gas stream using a front-end purification system to form a purified top gas stream;
further cooling the purified top gas stream to a second temperature that is sufficient for condensing at least a portion of the nitrogen within the top gas stream to form a dual-phase stream, wherein the second temperature is colder than the first temperature;
introducing the dual-phase stream to a cryogenic hydrogen separator under conditions effective for separating hydrogen and nitrogen, thereby creating a liquid nitrogen stream and a hydrogen top gas;
warming and vaporizing the liquid nitrogen stream to produce a gaseous nitrogen stream;
warming the hydrogen top gas to produce a gaseous hydrogen product stream; and
recycling the liquid ammonia stream produced by the ammonia separator to a point upstream the ammonia cracker.

2. The method as claimed in Claim 1, further comprising warming a liquid ammonia feed stream to produce the gaseous ammonia feed.

3. The method as claimed in any of the previous claims, wherein the cracked gas stream is cooled to the first temperature using refrigeration from a stream selected from the group consisting of the liquid ammonia feed stream, the liquid nitrogen stream, the hydrogen top gas, and combinations thereof.

4. The method as claimed in any of the previous claims, wherein the first temperature is between 0°C and a freezing point of ammonia at a pressure of the cracked gas stream.

5. The method as claimed in any of the previous claims, wherein the pressure of the cracked gas stream is between 10 and 50 bar(a).

6. The method as claimed in any of the previous claims, further comprising using heat from the cracked gas stream to produce steam.

7. The method as claimed in any of the previous claims, wherein an export steam to gaseous hydrogen product stream ratio is between 0 and 5 kg steam/Nm³ H₂.

8. The method as claimed in any of the previous claims, further comprising expanding the hydrogen top gas to provide additional refrigeration.

9. The method as claimed in any of the previous claims, wherein the hydrogen top gas is expanded to a pressure between 5 and 25 bar(a).

10. The method as claimed in any of the previous claims, wherein the front-end purification system is a temperature swing adsorber.

11. The method as claimed in any of the previous claims, wherein the liquid ammonia stream, after being heated, is recycled back to the ammonia cracker.
